# EUROPÄISCHE PATENTANMELDUNG

(11) **EP 4 001 762 A1**
(43) Veröffentlichungstag der Anmeldung: **25.05.2022**
(21) Anmeldenummer: 20207374.8
(22) Anmeldetag: 13.11.2020
(51) Int. Cl.: F23L 13/00, G01F 1/684, G01F 5/00

(54) **VORRICHTUNG ZUR STRÖMUNGSMESSUNG IN EINEM OFEN**

(71) Anmelder: Haas + Sohn Ofentechnik GmbH, 5412 Puch (AT)
(72) Erfinder: Neudeck, Andreas, 5302 Henndorf (AT)
(74) Vertreter: Patentanwälte Barger, Piso & Partner

(57) **Zusammenfassung**

Vorrichtung zur Differenzdruckmessung in einem Ofen, die so in einem Ofen angeordnet ist, dass Verbrennungsluft durch sie strömen muss. In der Vorrichtung wird die Luft durch eine Querschnittsreduktion an einer Stauscheibe beschleunigt. An einer Stelle vor und einer Stelle nach der Stauscheibe lassen sich Messwerte wie Druck oder Strömungsgeschwindigkeit bestimmen und die sich daraus ergebende Differenz zur Regelung des Saugzuggebläses heranziehen.

## Beschreibung

Die Erfindung betrifft eine Vorrichtung zur Strömungsmessung in einem Ofen mit einem Saugzuggebläse gemäß dem Oberbegriff des Anspruchs 1.

Öfen für die Verbrennung von Holz sowie gepresster biologischer Verbrennungsprodukte, nachfolgend allgemein als "Pellets" bezeichnet, erfreuen sich aufgrund der zumeist aus regenerativen Rohstoffquellen stammender Energieträger und der häufig gegenüber anderen Formen der Wärmegewinnung geringeren Betriebskosten wachsender Beliebtheit. Entscheidend in diesem Zusammenhang ist die Sicherstellung eines Durchzugs durch die Brennkammer, was einerseits für die Gesundheit der Benutzer wichtig ist wenn es darum geht das Rückströmen von Rauchgas zu verhindern, andererseits für die Reduktion von Emissionen, die bei unvollständiger Verbrennung entstehen können. Bei derartigen Öfen wird die Leistung des im Abgasstrom angeordneten Saugzuggebläses in Abhängigkeit von der Heizleistung gesteuert, was die Kenntnis der Strömungsverhältnisse im Ofen notwendig macht. Um diese zu bestimmen, werden im Stand der Technik aufwändige und teure Differenz-Drucksensoren verwendet. Es besteht daher der Wunsch nach einer wirtschaftlichen Methode, die einen ausreichenden Durchzug durch die Brennkammer des Ofens sicherstellt.

Es ist Ziel und Aufgabe der Erfindung, eine Vorrichtung zur Strömungsmessung in einem Ofen zu schaffen, die zur Steuerung bzw. Regelung des Durchzugs durch die Brennkammer eines Ofens über das Saugzuggebläse genutzt werden kann.

Erfindungsgemäß werden diese Ziele durch eine Vorrichtung zur Strömungsmessung erreicht, die die im kennzeichnenden Teil des Anspruches 1 angegebenen Merkmale aufweist. Mit anderen Worten, es wird die Vorrichtung so in einem Ofen angeordnet, dass Verbrennungsluft durch sie strömen muss. In der Vorrichtung wird die Luft durch eine Querschnittsreduktion an einer Stauscheibe beschleunigt. An einer Stelle vor und einer Stelle nach der Stauscheibe lassen sich Messwerte wie Druck oder Strömungsgeschwindigkeit bestimmen und die sich daraus ergebende Differenz zur Regelung des Saugzuggebläses heranziehen.

Die Erfindung wird nachfolgend anhand der Zeichnungen näher erläutert. Dabei zeigt
die Fig. 1 die Position einer erfindungsgemäßen Vorrichtung im Ofen,
die Fig. 2 die erfindungsgemäße Vorrichtung und
die Fig. 3 einen Querschnitt durch die erfindungsgemäße Vorrichtung parallel zur Rückwand entlang der Achse des Rohrs, aus dem die angesaugte Luft ausströmt.

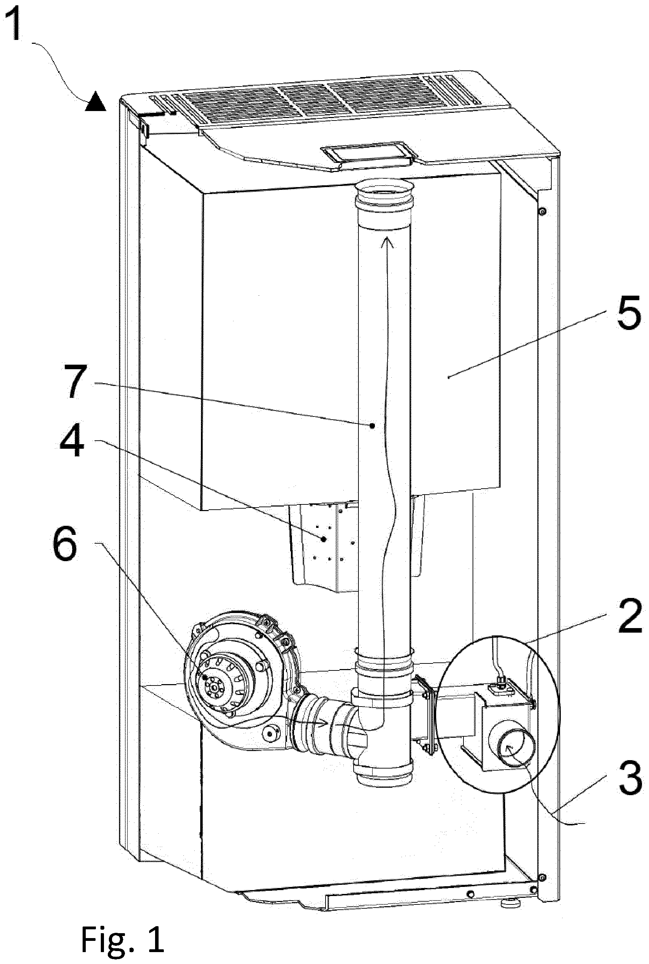

Die Fig. 1 zeigt in perspektivischer, teils geschnittener, Ansicht einen Ofen 1 mit einer erfindungsgemäßen Vorrichtung 2. Diese ist am Beginn der Zuleitung der Verbrennungsluft 3, strömungsmäßig somit vor einem Pelletbrenner 4, einer Brennkammer 5, dem Saugzuggebläse 6 und einem Abgaskanal 7 angeordnet. Die Rohrleitungen zwischen der Brennkammer 5 und dem Saugzuggebläse 6 sind hier nicht dargestellt.

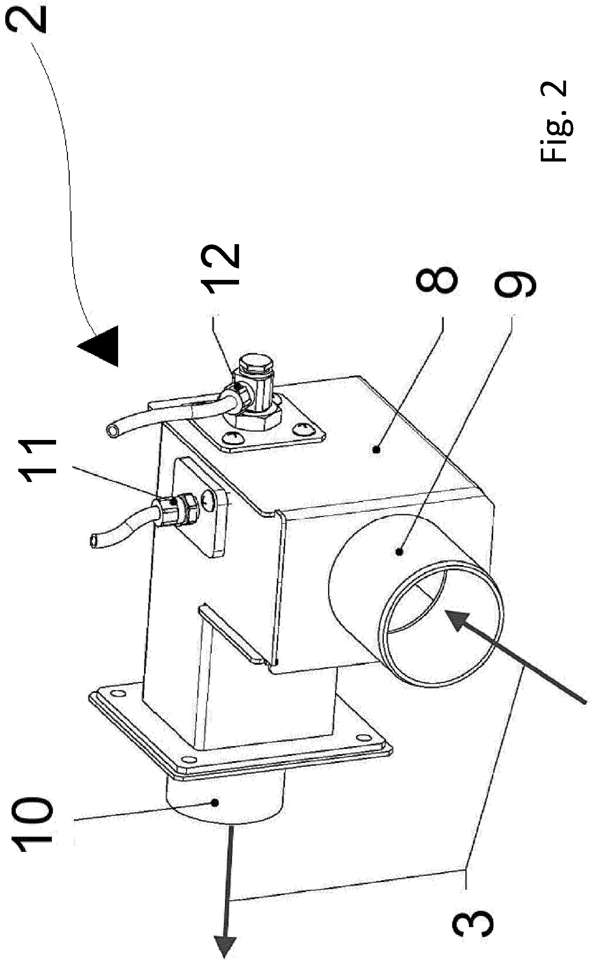

Die Fig. 2 zeigt eine perspektivische Ansicht der erfindungsgemäßen Vorrichtung 2. Sie weist ein Gehäuse 8, einen Ansaugkanal 9, einen Messkanal 10, eine Messstelle 11 für einen Einströmsensor (nicht dargestellt) für die Messung des Drucks der einströmenden Luft und eine Messstelle 12 für einen Ausströmsensor (nicht dargestellt) für die Messung des Drucks der ausströmenden Luft auf. Der Weg der Verbrennungsluft 3 ist durch Pfeile angedeutet.

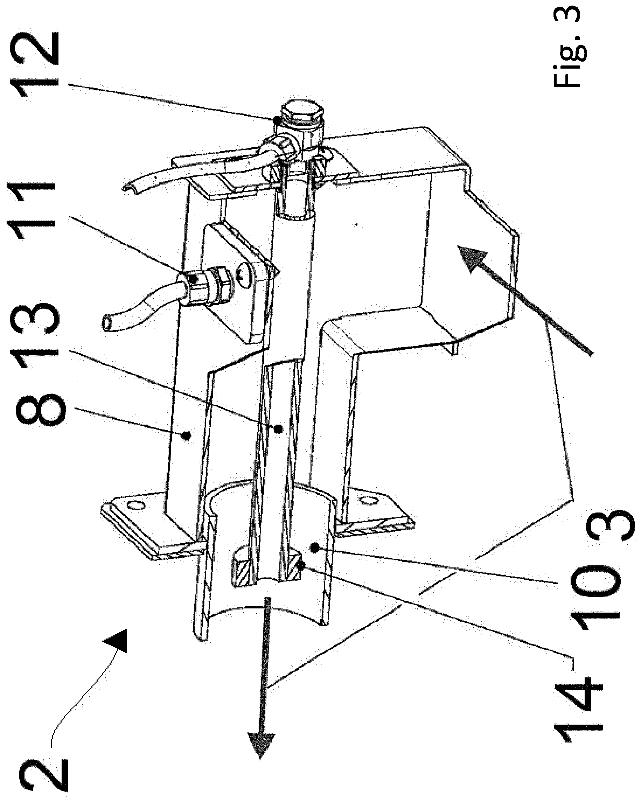

Die Fig. 3 zeigt einen Schnitt der perspektivischen Ansicht der erfindungsgemäßen Vorrichtung 2 aus Fig. 2. Die erfindungsgemäße Vorrichtung 2 weist eine Messleitung 13 auf, an deren innen liegenden Ende sich eine Stauscheibe 14 im Messkanal 10 befindet, und deren außen liegendes Ende, an dem die Messstelle 12 für einen Ausströmsensor (nicht dargestellt) angeordnet ist, am Gehäuse 8 montiert ist. Das Gehäuse 8 des dargestellten Ausführungsbeispiels ist im Wesentlichen L-förmig mit einem rechteckigen Querschnitt. Die Luft wird in ihm umgelenkt und ermöglicht so die Anordnung der Messleitung konzentrisch zum Messkanal 10.

Wird Frischluft durch das Saugzuggebläse 6 angesaugt, so muss diese die Stauscheibe 14 passieren. Dabei stellt sich durch die Stauscheibe 14 eine Querschnittsreduktion im Messkanal 10 ein, die zu einer lokale Geschwindigkeitserhöhung führt. Damit verbunden ist ein Druckgradient zwischen der Stauscheibe 14 und einem beliebigen Punkt innerhalb der erfindungsgemäßen Vorrichtung 2, der sich in Strömungsrichtung vor der Stauscheibe 14 befindet. Dieser Druckgradient wird zwischen den Messstellen 11 und 12 gemessen.

Ohne die Stauscheibe 14 wäre der Druckverlust zwischen den Messstellen 11 und 12 gering. Für jede Messmethode, die für die Regelung des verwendeten Saugzuggebläses 6 geeignet ist, wären sehr präzise und damit teure Sensoren nötig. Die Stauscheibe 14 erzeugte einen Druck- bzw. Geschwindigkeitsgradienten zwischen den Messstellen 11 und 12. Einerseits ermöglicht das eine genauere Messung der durchströmenden Luft, andererseits wird dadurch der Einsatz weniger fein auflösender Sensoren möglich. Diese Sensoren sind im Allgemeinen deutlich günstiger, was einen erheblichen wirtschaftlichen Vorteil bedeutet. Als Sensoren kommen dabei grundsätzlich alle aus dem Stand der Technik bekannten Drucksensoren in Betracht. Die Daten der Differenzdruckmessung werden anschließend an eine Regelungseinheit weitergeleitet, die in Abhängigkeit von der Heizleistung das Saugzuggebläse 6 regelt, welches seinerseits einen bestimmten Luftmassenstrom ansaugt. Methoden und Vorrichtungen zur Verarbeitung der Differenzdruckmessung sowie Regelungseinheiten für das Saugzuggebläse 6 sind aus dem Stand der Technik bekannt. Für den Differenzdruck in Abhängigkeit vom Heizwert konnten folgende Werte gefunden werden:

| **Heizleistung/h** | **Pelletverbrauch/h** | **erforderlicher Differenzdruck Δ*p* an der Messstrecke** |
|---|---|---|
| 4 kW/h | 0,91 kg/h | 12,4 Pa |
| 5 kW/h | 1,13 kg/h | 13,6 Pa |
| 6 kW/h | 1,37 kg/h | 14,8 Pa |
| 7 kW/h | 1,60 kg/h | 16,3 Pa |
| 8 kW/h | 1,85 kg/h | 17,7 Pa |

| **Betriebszustand** | | **erforderlicher Differenzdruck an der Messstrecke** |
|---|---|---|
| Brennertest vor der Startphase | | 48,4 Pa |
| Reinigungszyklus während des Heizbetriebes | | 24,0 Pa |

Diese Werte sind aus Versuchen bestimmte Daten. Die verwendeten Sensoren wurden vom Hersteller auf den Druckbereich "-125 Pa bis +125 Pa" kalibriert. Der erforderliche Differenzdruck kann bei Verwendung unterschiedlicher Pelletsorten um etwa ±3 Pa variieren. Für die Strömung wichtige Parameter wie Rohrquerschnitte und -form können variieren. Daher sind für den jeweiligen Anwendungsfall Versuche durchzuführen, die für eine Fachperson einfach und schnell möglich sind, um den jeweiligen Differenzdruck für den optimalen Heizwert der eingesetzten Pellets sicher zu stellen.

Bei der dargestellten Fassung handelt es sich um eine beispielhafte Ausführung, wobei die Erfindung nicht auf diese Ausführung beschränkt ist, sondern vielfach abgewandelt werden kann. Speziell ist es möglich die Drucksensoren direkt an den Messstellen 11 und 12 anzubringen. Weiters ist es möglich statt des Differentialdrucks (Δ*p*) den Luftmassestrom (*ṁ*), oder die Differenz der Strömungsgeschwindigkeiten des Luftmassestroms (Δ*v_{ṁ}*) als Regelgröße heranzuziehen. Außerdem ist es möglich die erfindungsgemäße Vorrichtung 2 nach der Brennkammer 5 anzuordnen, wobei eine Anbringung der erfindungsgemäßen Vorrichtung 2 zu Beginn der Frischluftzufuhr aufgrund der stabilen Temperatur- und Druckverhältnisse vorteilhaft ist. Schließlich ist es auch möglich die Stauscheibe 14 mit unterschiedlichen Querschnitten und Formen, und den Ansaugkanal 9, den Messkanal 10 und das Gehäuse 8 in unterschiedlichen aus dem Stand der Technik bekannten Formen auszugestalten. Es muss die erfindungsgemäße Vorrichtung 2 daher nicht L-förmig sein, sondern es wäre auch jede andere dem Platzangebot des Ofens entsprechende Form möglich. Beispielsweise Ausführungen, die in der Aufsicht Kreissegment- bzw. Bogenform besitzen, oder gerade sind. Somit ist es auch möglich anstatt eines Gehäuses ein durchgängiges Rohr zu verwenden. Als Materialien kommen grundsätzlich alle Materialen in Betracht, die sich für Rohrleitungen innerhalb eines Verbrennungsofens eignen. Weiters ist es auch möglich die Stauscheibe 14 nicht am Ende der Messleitung 13 anzuordnen, sondern beispielsweise mittels Verstrebungen im Messkanal 10 zu befestigen. Diese Aufzählungen sind beispielhaft und nicht abschließend zu sehen. So ist es insbesondere möglich, Teilaspekte der dargestellten Ausführungsform beliebig zu kombinieren und/oder zu vervielfachen.

Als Rauchgas wird in diesem Zusammenhang die Gesamtheit aller Stoffe angesehen, die durch die Verbrennung entstehen und als Gasförmige Phase (z.B. CO, CO₂, Wasserdampf,...), oder in dieser schwebend (z.B. Feinstaubpartikel, schwebende Glutpartikel,...), in die Umgebung übergehen. Ähnliche Ausdrücke für Rauchgas sind Verbrennungsgas, Abgas oder umgangssprachlich auch "Rauch".

Als Pelletbrenner wird der Behälter bezeichnet, in dem unter Zufuhr von Luft die eigentliche Verbrennung von Holz bzw. der Pellets stattfindet.

Die Brennkammer befindet sich oberhalb des Pelletbrenners. Es handelt sich dabei um den Raum, in dem die Flammen visuell sichtbar sind. Die Brennkammer dient einerseits der Erwärmung des Rauchgases, andererseits ist die Brennkammer oft durch eine transparente Scheibe von der Umgebung getrennt, wodurch der visuelle Effekt einer offenen Feuerstelle entsteht, jedoch ohne den damit verbundenen Risiken.

In der Beschreibung und den Ansprüchen werden die Begriffe "vorne", "hinten", "oben", "unten" und so weiter in der landläufigen Form und unter Bezugnahme auf den Gegenstand in seiner üblichen Gebrauchslage verwendet. Bei der erfindungsgemäßen Vorrichtung 2 in Fig. 1 ist daher beispielsweise der Ansaugkanal 9 vorne.

In der Beschreibung und den Ansprüchen bedeutet "im Wesentlichen" eine Abweichung von bis zu 10 % des angegebenen Wertes, wenn es physikalisch möglich ist, sowohl nach unten als auch nach oben, ansonsten nur in die sinnvolle Richtung, bei Gradangaben (Winkel und Temperatur) sind damit ± 10° gemeint.

Der Begriff: "Kombination" bzw. "Kombinationen" steht, sofern nichts anderes angegeben, für alle Arten von Kombinationen, ausgehend von zwei der betreffenden Bestandteile bis zu einer Vielzahl oder aller derartiger Bestandteile, der Begriff: "enthaltend" steht auch für "bestehend aus".

Die in den einzelnen Ausgestaltungen und Beispielen angegebenen Merkmale und Varianten können mit denen der anderen Beispiele und Ausgestaltungen frei kombiniert und insbesondere zur Kennzeichnung der Neuerung in den Ansprüchen ohne zwangläufige Mitnahme der anderen Details der jeweiligen Ausgestaltung bzw. des jeweiligen Beispiels verwendet werden.

**Liste der Bezugszeichen:**

| | | | |
|---|---|---|---|
| 1 | Ofen | 8 | Gehäuse |
| 2 | Erfindungsgemäße Vorrichtung | 9 | Ansaugkanal |
| 3 | Zuleitung der Verbrennungsluft | 10 | Messkanal |
| 4 | Pelletbrenner | 11 | Messstelle für einen Einströmsensor |
| 5 | Brennkammer | 12 | Messstelle für einen Ausströmsensor |
| 6 | Saugzuggebläse | 13 | Messleitung |
| 7 | Abgaskanal | 14 | Stauscheibe |

## Patentansprüche

1. Vorrichtung zur Strömungsmessung in einem Ofen (2), enthaltend einen Ansaugkanal (9), durch den Luft in die Vorrichtung einströmt und einen Messkanal (10), durch den die Luft aus der Vorrichtung ausströmt, **dadurch gekennzeichnet, dass** sich eine Stauscheibe (14), die quer zur Strömungsrichtung der Luft steht, im Messkanal (10) befindet, eine Messstelle (11) für einen Einströmsensor, die sich vor der durch die Stauscheibe (14) entstehenden Engstelle befindet und eine Messstelle (12) für einen Ausströmsensor, die sich nach der durch die Stauscheibe (14) entstehenden Engstelle im Messkanal (10) befindet.

2. Vorrichtung nach Anspruch 1, **dadurch gekennzeichnet, dass** sie eine Messleitung (13) aufweist, an deren Ende sich die Stauscheibe (14) und die Messstelle (12) für den Ausströmsensor befindet.

3. Vorrichtung nach Anspruch 1, **dadurch gekennzeichnet, dass** die Stauscheibe (14) mittels einer oder mehrerer Verstrebungen direkt mit dem Messkanal (10) verbunden ist.

4. Vorrichtung nach einem der Ansprüche 1 bis 3, **dadurch gekennzeichnet, dass** der Einströmsensor und der Ausströmsensor Drucksensoren sind.

5. Vorrichtung nach einem der Ansprüche 1 bis 3, **dadurch gekennzeichnet, dass** der Einströmsensor und der Ausströmsensor Geschwindigkeitssensoren sind.

6. Vorrichtung nach einem der Ansprüche 1 bis 5, **dadurch gekennzeichnet, dass** der Einstromsensor und der Ausströmsensor direkt an den jeweiligen Messstellen (11) und (12) angebracht sind.

7. Vorrichtung nach einem der Ansprüche 1 bis 5, **dadurch gekennzeichnet, dass** der Einstromsensor und der Ausströmsensor durch Messleitungen mit den jeweiligen Messstellen (11) und (12) verbunden sind.
